(19) Europäisches Patentamt / European Patent Office / Office européen des brevets

(11) **EP 4 195 531 B1**

(12) **FASCICULE DE BREVET EUROPEEN**

(45) Date de publication et mention de la délivrance du brevet:
**31.07.2024 Bulletin 2024/31**

(21) Numéro de dépôt: **22211607.1**

(22) Date de dépôt: **06.12.2022**

(51) Classification Internationale des Brevets (IPC):
**H04B 7/185** (2006.01)     **H04W 56/00** (2009.01)

(52) Classification Coopérative des Brevets (CPC):
**H04B 7/18513; H04W 56/004**

(54) **DISPOSITIF DE COMMUNICATION POUR UNE COMMUNICATION 5G ENTRE UN TERMINAL MOBILE ET UN RÉSEAU CENTRAL VIA UN SATELLITE**

KOMMUNIKATIONSVORRICHTUNG ZUR 5G-KOMMUNIKATION ZWISCHEN EINEM MOBILEN ENDGERÄT UND EINEM KERNNETZWERK ÜBER EINEN SATELLITEN

COMMUNICATION DEVICE FOR 5G COMMUNICATION BETWEEN A MOBILE TERMINAL AND A CORE NETWORK VIA A SATELLITE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **09.12.2021 FR 2113205**

(43) Date de publication de la demande:
**14.06.2023 Bulletin 2023/24**

(73) Titulaire: **THALES**
**92190 Meudon (FR)**

(72) Inventeurs:
• **ARNAUD, Mathieu**
**31100 TOULOUSE (FR)**
• **BAUDRY, Benjamin**
**31100 TOULOUSE (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
• HUAWEI ET AL: "Discussion on UL time and frequency synchronization enhancement for NTN", vol. RAN WG1, no. E-meeting; 20210412 - 20210420, 7 April 2021 (2021-04-07), XP052177062, Retrieved from the Internet <URL:https://ftp.3gpp.org/tsg_ran/WG1_RL1/TSGR1_104b-e/Docs/R1-2102342.zip R1-2102342.docx> [retrieved on 20210407]
• MODERATOR (THALES): "FL Summary on enhancements on UL time and frequency synchronization for NR", vol. RAN WG1, no. e-Meeting; 20210510 - 20210527, 21 May 2021 (2021-05-21), XP052012992, Retrieved from the Internet <URL:https://ftp.3gpp.org/tsg_ran/WG1_RL1/TSGR1_105-e/Inbox/R1-2104303.zip R1-2104303.docx> [retrieved on 20210521]
• THALES: "Discussion on timing relationship enhancement in NTN", vol. RAN WG1, no. e-Meeting; 20210412 - 20210420, 6 April 2021 (2021-04-06), XP051993470, Retrieved from the Internet <URL:https://ftp.3gpp.org/tsg_ran/WG1_RL1/TSGR1_104b-e/Docs/R1-2103671.zip R1-2103671.docx> [retrieved on 20210406]

## Description

Domaine technique

La présente invention concerne la mise en oeuvre de communications 5G sur un terminal mobile via un satellite d'une constellation de satellites.

Technique antérieure

Les systèmes satellites pour les terminaux mobiles sont aujourd'hui propriétaires et peu ou pas interopérables ni entre les différents systèmes satellites, ni avec les réseaux mobiles terrestres. Les terminaux mobiles et les équipements réseaux existants coutent chers et sont spécifiques. Cela les limite à des marchés de niche et ne leur permet pas de créer une solution pour le marché grand public.

L'organisme de standardisation des réseaux mobiles 3GPP (pour « 3rd Génération Partnership Project » en anglais) tente de répondre à ce problème en proposant des modifications au standard 5G, dit cinquième génération de réseau mobile, pour le rendre compatible d'un point de vue satellite. Des modifications sont alors à prévoir sur l'ensemble des composants du système. Pour cela, une nouvelle version du standard 3GPP est en cours d'élaboration dans la version n°17 pour permettre l'utilisation de la 5G par satellite dans le cadre d'un groupe de travail 3GPP NTN (pour « Non-Terrestrial Networks » en anglais). Cette version prévoit des modifications au niveau des différentes composantes du système de communication. Il est connu qu'un système de communication pour une communication 5G comprend un réseau central (dit « Core Network » en anglais) et au moins une station de base. Dans un système par satellite, le système de communication comprend également au moins une passerelle disposée entre la station de base et le satellite. Le système de communication permet ainsi une communication 5G entre des terminaux mobiles et le réseau central.

Même si des modifications au niveau du standard 3GPP seront faîtes, les terminaux mobiles, le réseau central et la station de base ne sont pas conçus et développées pour des canaux de propagation de type satellitaire ni pour gérer des modifications dynamiques dans la topologie d'un réseau résultant d'une constellation de satellites non-géostationnaires. Les documents 3GPP R1-2102342, R1-2104303 et R1-2103671 constituent des exemples de l'art antérieur.

Il existe donc un besoin de proposer une solution permettant de minimiser les impacts du support de l'accès 5G par satellite sur la station de base et le terminal mobile pour réutiliser des équipements standards.

Exposé de l'invention

La présente invention vise à remédier au moins en partie à ce besoin.

Plus particulièrement, la présente invention a pour objectif de favoriser l'adoption de l'accès satellite par l'écosystème 3GPP cellulaire.

Pour cela un premier objet de l'invention concerne un système de communication pour une communication 5G entre au moins un terminal mobile et un réseau central, ledit système de communication comprenant au moins un satellite, une station de base reliée au réseau central et une passerelle disposée entre ledit satellite et ladite station de base. Le satellite et la passerelle sont aptes à échanger des trames de lien feeder. Le terminal et le satellite sont aptes à échanger des trames de données dites trames de service. Les trames de service comprennent des trames de service montantes et des trames de service descendantes, lesdites trames de service montantes devant être alignées temporellement avec lesdites trames de service descendantes autour d'un point de référence temporel. Le satellite comporte une charge utile comprenant une unité radio adaptée pour gérer les échanges de trames de service entre ledit satellite et ledit le terminal mobile. Le système de communication comprend un dispositif de compensation adapté pour compenser des écarts temporels dans l'échange des trames lien feeder en vue d'aligner temporellement les trames de service montantes et les trames de service descendantes autour du point de référence temporel. Le dispositif de compensation comprend un module tampon disposé dans la charge utile du satellite, ledit module tampon étant apte à recevoir les trames lien feeder. Le dispositif de compensation comprend un module de pré-compensation dans la passerelle et dans lequel le module tampon est apte à resynchroniser temporellement les trames lien feeder par rapport à une horloge de référence du satellite.

De manière connue, la station de base d'un système de communication 5G est composée d'une unité centrale (dite « Central Unit » en anglais), d'une unité distribuée (dite « Distributed Unit » en anglais) pour la bande de base et d'une unité radio (dite « Radio Unit » en anglais). L'invention propose ici que l'unité radio est portée par une charge utile du satellite, tout en permettant de conserver au sol les principales fonctionnalités de la station de base, unité centrale et unité distribuée, en vue d'optimiser le coût global du système. Afin de gérer les délais importants (plusieurs millisecondes au moins pour des orbites basses de type LEO et nettement plus pour des orbites de type MEO) et variables entre l'unité radio et la bande de base au sol résultants de l'intégration de l'unité radio dans le satellite, il est prévu un mécanisme de compensation pour compenser les écarts temporels dans l'échange des trames de lien feeder. Ce mécanisme autorise un masquage desdits écarts temporels vis-à-vis du terminal mobile, qui n'a pas alors besoin de compenser directement ces écarts. L'invention permet également de déplacer le point de référence temporel d'interface 5G en n'importe quel point du système. Dans le standard 3GPP 5G, le point de référence d'interface 5G est un point où les trames de service montantes sont alignées temporellement avec les trames de service descendantes dans un système à division duplex en fréquence (dit « FDD » en anglais). En outre, l'alignement des trames dans le sens montant entre les différents terminaux d'une cellule 5G est nécessaire pour éviter les interférences entre eux. Dans le standard 3GPP, de façon à respecter l'alignement au niveau du point de référence temporel d'interface 5G, le terminal mobile doit appliquer une anticipation (dite « Timing advance » en anglais) sur l'émission dans le sens montant. Cette anticipation est pilotée et corrigée par la station de base, en fonction de la dérive mesurée par ladite station de base sur la réception de trames, de façon à compenser un délai aller-retour (dit « Round-Trip Delay » en anglais) entre le terminal mobile et le point de référence temporel d'interface 5G. Dans un système 5G terrestre, le point de référence est situé au niveau d'une antenne de la station de base donc très proche de la bande de base, ce qui permet de négliger le délai de propagation entre les deux. Dans un tel système 5G terrestre, avoir un point de référence autre qu'au niveau de la station de base (au sol) impliquerait que cette station de base prenne en compte dynamiquement le délai entre ce point de référence et la station de base au moment de planifier (ou « scheduling » en anglais) les trames. Cette planification est typiquement à faire toutes les millisecondes. Dans un système satellite, il faut donc à la fois connaître le délai sur le lien de connexion entre la passerelle et le satellite (dit lien « feeder » en anglais), basé sur la connaissance de la position actuelle du satellite et de la station de base ou bien en effectuant une mesure du délai de transport sur le lien, tout en étant capable d'adapter la planification en fonction du délai réel, ce qui peut être complexe à mettre en oeuvre.

Par le mécanisme de compensation, l'invention permet de déplacer le point de référence d'interface 5G à distance de la station de base tout en rendant moins complexe la gestion d'un tel déplacement de point de référence.

L'invention propose également d'implémenter une bufférisation, au niveau du satellite, des trames lien feeder reçues de la passerelle avant émission vers le terminal mobile, afin d'absorber la variation de délai sur le lien feeder entre le satellite et la station de base au sol.

En outre, il est possible d'économiser la mémoire nécessaire dans le satellite pour implémenter la bufférisation. Une implémentation plus économique consiste alors à faire une première bufférisation au niveau de passerelle pour compenser l'essentiel du délai sur le lien feeder, le satellite n'étant plus qu'en charge de la synchronisation fine des trames de service avec le temps de référence avant émission vers le terminal mobile.

Dans un mode de réalisation particulier, la charge utile est partiellement régénérative.

Cette architecture régénérative présente plusieurs avantages en réduisant grandement la bande passante nécessaire sur le lien feeder pour faire passe le trafic entre le satellite et la passerelle.

Dans un mode de réalisation particulier, le point de référence est disposé au niveau du satellite.

Dans un mode de réalisation particulier, le terminal mobile appartenant à une cellule 5G, le point de référence temporel est disposé au niveau de ladite cellule 5G.

Dans un mode de réalisation particulier, l'unité radio comprend un module Radio-Fréquence (« RF ») et/ou un module L1 ou L1-low.

Le satellite embarque alors une partie des fonctionnalités 5G, c'est-à-dire la RF 5G qui génère les trames de service et le module L1-low qui correspond à la partie basse de la couche physique dans une découpe fonctionnelle eCPRI (« enhanced Common Public Radio Interface » en anglais) de type « split 7 ou ses dérivés « split 7-2/7-2x/7-3 » ou bien un module L1 qui correspond à la totalité de la couche physique dans une découpe fonctionnelle eCPRI de type « split 6 ».

Un autre objet de l'invention concerne un procédé de communication pour une communication 5G entre au moins un terminal mobile et un réseau central, ledit procédé de communication comprenant :

- des échanges de trames lien feeder entre ledit satellite et une passerelle, ladite passerelle étant disposée entre ledit satellite et une station de base reliée au réseau central ;
- des échanges de trames de données, dites trames de service, entre ledit terminal mobile et un satellite, lesdites trames de service comprenant des trames de service montantes et des trames de service descendantes, lesdites trames de service montantes devant être alignées temporellement avec lesdites trames des service descendantes autour d'un point de référence temporel, lesdites trames de service étant gérées par une unité radio appartenant à une charge utile du satellite ;
- une étape de compensation adapté pour compenser des écarts temporels dans l'échange des trames lien feeder en vue d'aligner temporellement les trames de service montantes et les trames de service descendantes autour du point de référence temporel. L'étape de compensation comprend deux sous-étapes réalisées respectivement dans la charge utile du satellite et dans la passerelle.

La présente invention sera mieux comprise à la lecture de la description détaillée de modes de réalisation pris à titre d'exemples nullement limitatifs et illustrés par les dessins annexés sur lesquels :

[Fig 1] la figure 1 illustre un système de communication selon l'invention pour une communication 5G entre au moins un terminal mobile et un réseau central via un satellite ;

[Fig 2] la figure 2 illustre un fonctionnement d'une charge utile dans le satellite de la figure 1 ;

[Fig 3] la figure 3 illustre un premier mode de réalisation d'un dispositif de compensation dans le système de communication de la figure 1 ;

[Fig 4] la figure 4 illustre une synchronisation entre les différents points du système de communication avec un point de référence temporel déplacé dans le satellite ;

[Fig 5] la figure 5 illustre un second mode de réalisation d'un dispositif de compensation dans le système de communication de la figure 1 ;

[Fig 6] la figure 6 illustre un double étage de temporisation -compensation selon le second mode de réalisation ;

[Fig 7] la figure 7 illustre un troisième mode de réalisation d'un dispositif de compensation dans le système de communication de la figure 1 ;

[Fig 8] la figure 8 illustre les étapes d'un procédé de communication selon l'invention pour une communication 5G entre au moins un terminal mobile et un réseau central.

L'invention n'est pas limitée aux modes de réalisation et variantes présentées et d'autres modes de réalisation et variantes apparaîtront clairement à l'homme du métier. L'objet de l'invention est défini par les revendications.

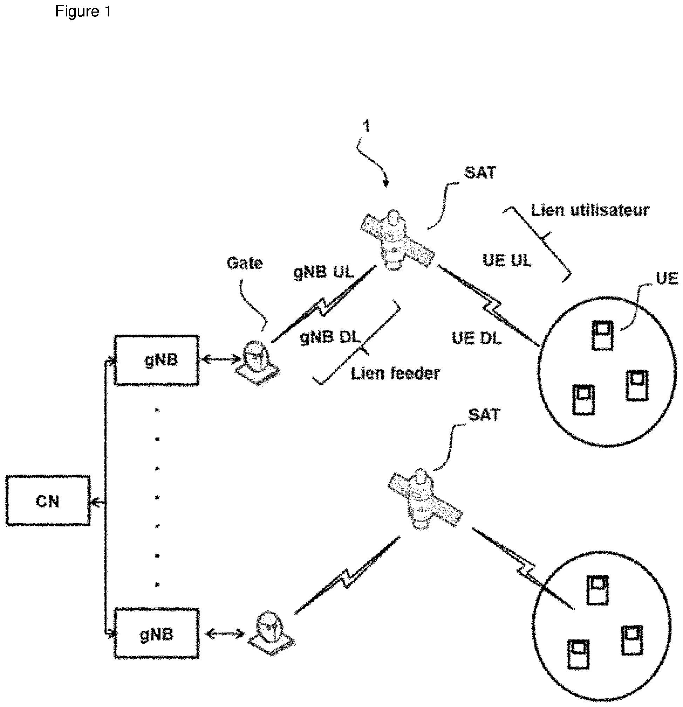

La figure 1 illustre un système de communication 1 pour une communication 5G entre un réseau central CN et un terminal mobile UE. Le réseau central CN permet une interconnexion avec différent fournisseurs de service. Il comprend une pluralité de routeurs et de commutateurs qui permettent de fournir des fonctions d'agrégation, d'authentification, de contrôle, de facturation, d'invocation de service et/ou de passerelles. Le terminal mobile UE est adapté pour recevoir et échanger des trames de service, plus particulièrement, ces trames de service peuvent être des trames de service montantes UE UL émises par le téléphone mobile UE ou des trames de services descendantes UE DL reçues par ce téléphone mobile UE. Les trames de service montantes UE UL sont alignées temporellement avec les trames de service descendantes UE DL autour d'un point de référence temporel $R_P$.

Le système de communication 1 comprend :

-   au moins un satellite SAT ;
-   une pluralité de passerelles Gate ;
-   une pluralité de stations de base gNB.

Le satellite SAT est adapté pour émettre des trames de service descendantes UE DL à destination du téléphone mobile UE. Le satellite SAT est également adapté pour recevoir des trames de service montantes UE UL émises par l'équipement mobile UE. Les trames de service montantes UE UL et les trames de service descendantes UE DL utilisent, par exemple, une bande de fréquence allant de 2 GHz à 4 GHz (bande S). En variante, les trames de service montantes UE UL et les trames de services descendantes UE DL utilisent les fréquences de la bande C. D'autres bandes de fréquence peuvent être également utilisées, telles que la bande L (1,5-1,7 GHz), ou des bandes MS (cellulaires-terrestres). Le satellite SAT est également adapté pour gérer des trames lien feeder échangées avec les stations de base gNB. Ces trames lien feeder comprennent des trames lien feeder montantes gNB UL émises par les stations de base gNB en direction du satellite SAT et des trames lien feeder descendantes gNB UL émises par le satellite SAT en direction des stations de base gNB. Les trames lien feeder utilisent la bande Ka via un protocole de type eCPRI/ORAN (pour « Open Radio Access Network » en anglais). En variante, les trames lien feeder utilisent les bandes Q/V ou la bande C. Le satellite SAT est ainsi à l'interface entre les trames lien feeder et les trames de service ce qui permet à des données d'être véhiculées par des trames lien feeder entre les stations de base gNB et le satellite SAT puis par des trames de service entre le satellite SAT et le téléphone mobile UE. Le satellite SAT est, par exemple, un satellite défilant sur une orbite non-géostationnaire dit satellite NGSO (pour « Non-Geostationary Orbit » en anglais), tel qu'un satellite LEO (pour « Low-Earth Orbit » en anglais), vLEO (pour « very Low-Earth Orbit » en anglais) ou MEO (pour « Medium-Earth Orbit » en anglais). Le point de référence de ce satellite se déplace par rapport aux stations de base gNB et ce délai est grandement variable, par exemple il peut être compris entre 2 et 5 ms avec une vitesse de variation pouvant atteindre jusqu'à 25ppm dans le cas où le satellite est sur une orbite à 600 km.

Les stations de base gNB sont adaptées pour émettre des trames lien feeder montantes gNB UL et pour recevoir des trames lien feeder descendantes gNB DL. Chaque station de base gNB est composée d'une unité centrale CU (pour « Central Unit » en anglais), d'une unité distribuée DU (pour « Distributed Unit ») pour une bande de base et d'une unité radio RU (pour « Radio Unit »).

Les passerelles Gate sont disposées entre les stations de base gNB et le satellite SAT. Elles permettent de rendre possible une communication entre l'environnement filaire des stations de base gNB et l'environnement radio associé au satellite SAT.

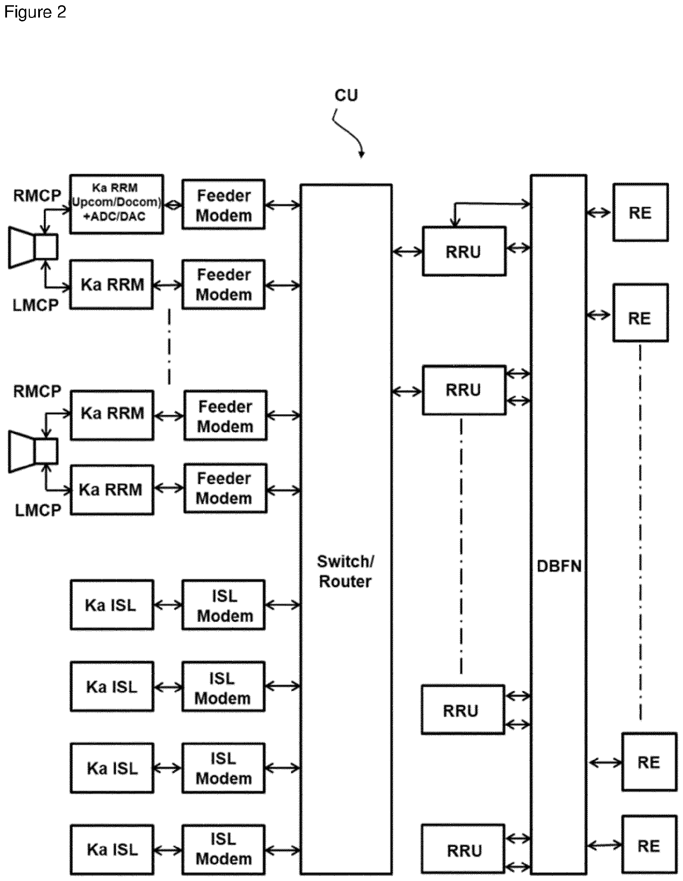

La figure 2 illustre un fonctionnement d'une charge utile CU dans un satellite LEO de la figure 1. L'architecture de la charge utile comprend la fonctionnalité Radio Unit (RRU) à bord du satellite SAT. La charge utile CU est connectée à un réseau numérique distribué de formation de faisceaux pour les trames de service descendantes UE DL vers le terminal mobile UE. Cette charge utile CU est également reliée à la passerelle Gate qui assure la connectivité vers des modems gérant les trames lien feeder descendantes gNB DL vers les stations de base gNB. Dans ce cas, les signaux numériques à émettre dans les différents faisceaux formés par l'antenne sont transportés via le protocole eCPRI/ORAN, par exemple suivant la norme ORAN, depuis/vers les stations de base gNB ou entre les satellites SAT à travers les ISLs. L'architecture de la charge utile CU correspond à une découpe fonctionnelle « split 7-2/7-2x7-3 ». La fonction RU est chargée de convertir les signaux du gNB (en général des données numériques sous forme I/Q, véhiculées en CPRI ou eCPRI) en signaux de l'interface radio 5G avec le terminal mobile UE. Les données des différents faisceaux sont multiplexés sur le lien feeder et la charge utile CU fait le multiplexage/demultiplexage pour les émettre/recevoir dans les faisceaux correspondants sur le lieu utilisateur Uu entre le satellite SAT et le terminal mobile UE.

L'invention propose de réaliser l'architecture décrite à la figure 2 où la fonction RU est placée dans le satellite, donc loin du gNB, tout en étant capable de gérer un délai important et variable entre le satellite et gNB, ce qui n'est pas le cas des équipements 5G terrestres actuels.

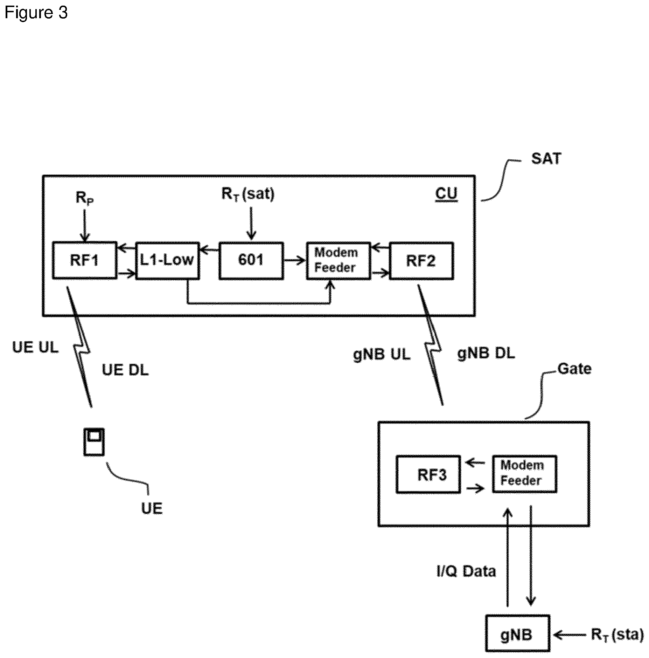

La figure 3 illustre un premier mode de réalisation d'un dispositif de compensation dans le système de communication de la figure 1, dans lequel une compensation est réalisée au niveau du satellite SAT. Ce dispositif de compensation comprend un module tampon 601 au niveau du satellite SAT. Le module tampon 601 est adapté pour stocker les trames lien feeder montantes gNB UL avant leur émission via un module radio fréquence RF1 afin d'absorber la variation de délai sur le lien feeder entre le satellite SAT et la station de base gNB.

Il est à noter que le stockage de trames, dit bufférisation, par le module tampon 601 est potentiellement inutile dans le sens module radio fréquence RF2 vers la station de base gNB. En effet, rien n'empêche la station de base gNB de traiter les trames lien feeder descendantes dès réception à partir du moment où sont données les informations sur le numéro de trame/slot/symbole correspondant à chaque trame. Néanmoins, le principe de bufférisation peut être également appliqué dans ce sens si la station de base gNB considérée à une contrainte d'implémentation nécessitant de recevoir les trames lien feeder descendantes avec une latence fixe par rapport au point de référence temporel $R_P$.

L'implémentation de la figure 3 s'applique au cas où le satellite SAT embarque une partie des fonctionnalités 5G, c'est-à-dire qu'un traitement est appliquée au niveau de la couche physique des trames 5G avant émission vers le terminal mobile UE ou vers la station de base gNB. Le satellite SAT embarque dans ce but un module L1-Low qui correspond à la partie basse de la couche physique dans une découpe fonctionnelle de type « split 7-2/7-2x/7-3 ».

Le lien feeder transporte des données numériques I/Q entre la station de base gNB et le second module radio fréquence RF2 en utilisant, par exemple, un lien de type DVB-S2x, avec des modems DVB pour le lien feeder dans la station de base et dans le satellite.

L'Unité Radio présente dans la charge utile CU dispose d'une horloge interne, dénotée $R_T$(sat) liée au satellite SAT. Cette horloge de référence $R_T$(sat) est par exemple basée sur du GNSS (pour « Géolocalisation et Navigation par un Système de Satellites ») pour permettre d'émettre les trames mémorisées dans le module tampon 601 vers le terminal mobile UE au bon instant.

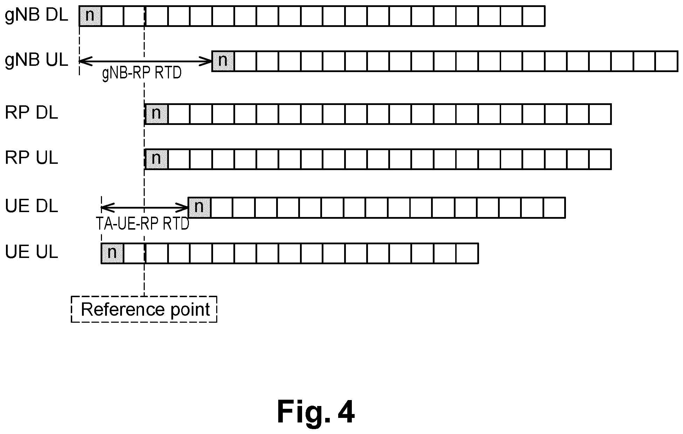

La figure 4 illustre une synchronisation entre les différents points du système de communication 1 dans le mode de réalisation de la figure 3. Une synchronisation temporelle est nécessaire entre le satellite SAT et la station de base gNB au sol (par exemple basée sur du GNSS) afin de garder synchrones les références de temps de ces deux éléments, la station de base gNB ayant des timings montants et descendants qui présentent un décalage fixe par rapport au satellite, le délai aller-retour (Round Trip Delay, RTD) gNB-RP étant fixe vu de la station de base gNB. Ainsi, la station de base gNB doit émettre les trames vers le satellite SAT avec une anticipation égale à la moitié du RTD gNB-RP. Elle peut être éventuellement considérée comme une valeur fixe et paramétrable dans le système pour couvrir sa valeur maximale et, dans ce cas, cette valeur n'a pas à être mesurée par le système.

Dans l'implémentation de ce mode de réalisation, la limite maximale à la distance entre la station de base gNB et le point de référence temporel $R_P$ est déterminée en pratique par la capacité mémoire dans le satellite SAT pour la bufférisation des trames lien feeder montantes gNB UL.

Cette implémentation nécessite d'avoir la capacité de mémoriser dans le satellite SAT les trames lien feeder montantes gNB UL sur des durées qui correspondent à la variation maximale du délai sur le lien feeder (plusieurs ms), ceci pour tous les faisceaux gérés par le satellite (potentiellement plusieurs centaines), ce qui peut être un contrainte forte en terme de quantité de mémoire nécessaire dans la charge utile CU (par exemple plusieurs Moctets pour le satellite SAT gérant plusieurs centaines de faisceaux).

On notera que dans ce mode de réalisation, il n'est pas nécessaire de calculer le temps de propagation entre le satellite SAT et la passerelle Gate, car les informations temporelles (identifiant le numéro de trame, slot, symbole) véhiculées avec les trames eCPRI sont suffisantes pour connaître le temps auquel doit avoir lieu l'émission de la trame radio de service descendante correspondante.

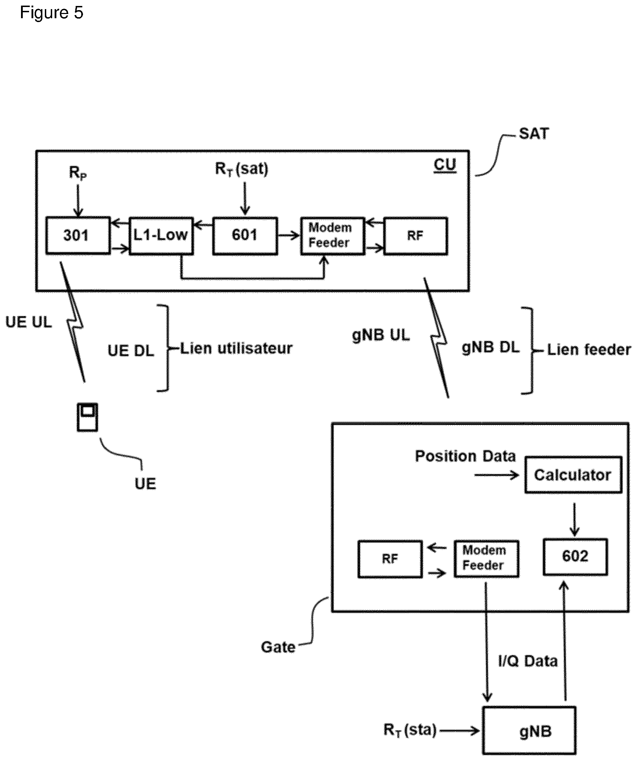

La figure 5 illustre un second mode de réalisation d'un dispositif de compensation dans le système de communication de la figure 1, dans lequel des precompensations sont combinées au niveau du sol et du satellite. Ainsi, outre le module tampon 601 présent dans le satellite SAT, la figure 5 décrit un module de pré-compensation 602 dans la passerelle Gate. Le module tampon 601 est apte à resynchroniser temporellement les trames lien feeder gNB UL, gNB DL par rapport à l'horloge de référence $R_T$(sat) du satellite SAT. Afin d'économiser la mémoire nécessaire dans le satellite SAT pour implémenter la bufférisation, une implémentation plus économique consiste à faire un première bufférisation au niveau du module de pré-compensation 602 pour compenser l'essentiel du délai sur le lien feeder, le satellite SAT n'étant plus qu'en charge de la synchronisation fine des trames de service avec le point de référence temporel $R_P$. avant émission sur le lien de service vers l'utilisateur.

Grâce aux informations fournies par un centre de contrôle satellite (non représenté) sur les éphémérides et connaissant la position de station de base gNB, le module de pré-compensation 602 dans la passerelle (Gate) applique une précompensation du délai du lien feeder. Cette précompensation est déterminée de la manière qui suit. Grâce à la connaissance de la position du satellite SAT et celle de la passerelle Gate, le temps de propagation entre le satellite SAT et la passerelle Gate peut être calculé et compensé.

$$\Delta t_{SAT} = \frac{|\vec{d}|}{c}$$

$$\Delta t_{SAT} = \frac{\sqrt{(P_x^{SAT} - P_x^{GW})^2 + (P_y^{SAT} - P_y^{GW})^2 + (P_z^{SAT} - P_z^{GW})^2}}{c}$$

A chaque slot (1 ms), la compensation est mise à jour.

Basée sur une FIFO régulée par les variations de timing :

Quand le timing grandi, la FIFO se vide progressivement pour compenser l'augmentation du délai. Quand le timing diminue, la FIFO se remplie progressivement pour compenser la diminution du délai. Tout cela permet que $\Delta t_{SAT} + \Delta t_{FIFO}$ reste constant afin de masquer les variations de $\Delta t_{SAT}$. La FIFO doit bien sûr être dimensionnée de sorte que $\Delta t_{FIFO\_MAX} = \Delta t_{SAT\_MAX} - \Delta t_{SAT\_MIN}$. Il est aussi possible de compenser le délai jusqu'au centre du faisceau, en prenant en compte la distance entre satellites et le centre du faisceau dans le calcul de $\Delta t_{SAT}$ et de combiner les deux compensations, mais cela nécessite une bufférisation plus importante.

Pour chaque trame lien feeder montante gNB UL provenant de la station de base gNB, lorsque l'interface est de type eCPRI (par exemple ORAN), les informations véhiculées avec la trame permettent de connaître simplement le temps auquel les données qu'elle contient doivent être émises sur le lien de service descendant car ces informations contiennent une indication sur le numéro de trame, le numéro de slot et le numéro du symbole auxquels elle correspond. Ces informations sont fournies par la station de base gNB au satellite SAT pour le sens descendant vers le terminal mobile UE. Ces informations sont fournies par le terminal mobile UE à la station de base gNB pour le sens montant, c'est-à-dire du terminal mobile UE vers la station de base gNB, basé sur le point de référence temporel $R_P$.

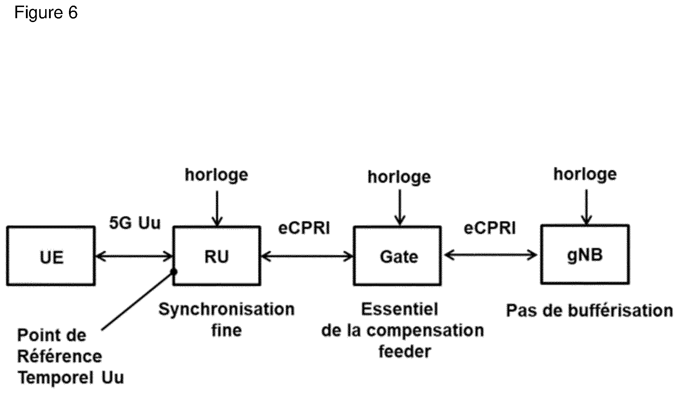

La précompensation faite par le module de pré-compensation 602 dans la passerelle Gate peut difficilement être appliquée avec une précision compatible avec les exigences 3GPP pour le signal sur le lien de service. En effet, l'erreur temporelle par rapport au temps de référence doit rester bien inférieure à la durée du préfixe cyclique (Cyclic Prefix) de la norme 5G, c'est-à-dire inférieure à environ la microseconde pour éviter des interférences inter-symboles. Comme il est illustré à la figure 6, une resynchronisation fine sur le point de référence temporel $R_P$ est appliquée au niveau du satellite SAT avant génération des trames de service descendantes UE DL vers le terminal mobile UE. La précompensation appliquée au niveau de la passerelle Gate doit faire en sorte de garantir que les trames arrivent au niveau du satellite SAT avant la date d'émission au point de référence temporel $R_P$. Ainsi cette précompensation doit prendre en compte une marge pour couvrir une incertitude de l'évaluation du délai feeder (et du temps de traitement dans le satellite). Cette marge peut typiquement être réduite à quelques dizaines de $\mu$s, voire moins, et la durée de bufférisation maximale dans le satellite peut être bornée à cette valeur de quelques dizaines de $\mu$s, ce qui nécessite que quelques dizaines Koctets de mémoire au plus pour quelques centaines de faisceaux.

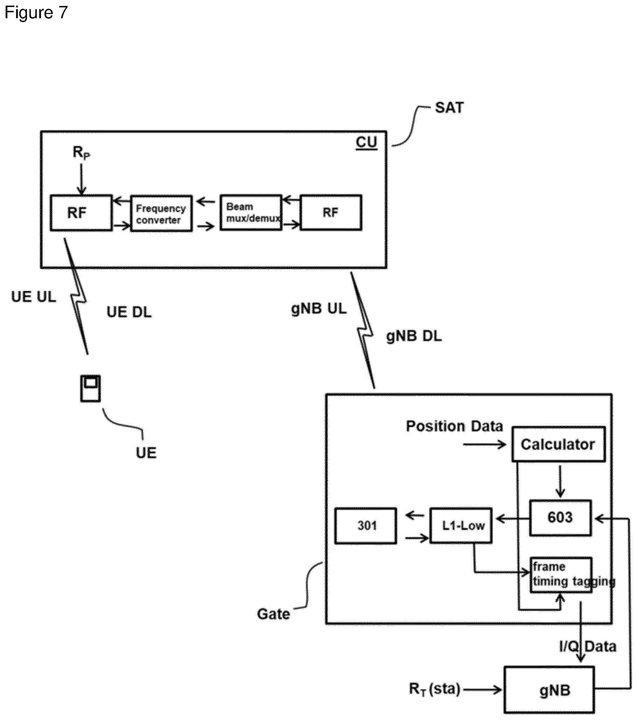

La figure 7 illustre un troisième mode de réalisation d'un dispositif de compensation dans le système de communication de la figure 1. Dans ce mode de réalisation, la précompensation est uniquement au niveau du sol, par exemple, dans la passerelle Gate.

Dans le cas d'un satellite avec une charge utile transparente, il est difficile d'appliquer une compensation au niveau de ce satellite car il relaie directement le signal provenant du terminal mobile UE et n'est qu'un répéteur chargé d'envoyer/recevoir les signaux sur les différents faisceaux, avec une transposition de fréquence entre la bande de fréquence utilisée sur le lien feeder et celle utilisée sur le lien utilisateur avec le terminal mobile UE, le temps de traitement dans le satellite pouvant être considéré comme une valeur fixe. Il est alors possible d'appliquer une précompensation au niveau du sol.

Comme aucune synchronisation des trames à destination du terminal mobile UE ne peut pas être appliquée par le satellite, la synchronisation est effectuée juste avant l'unité radio qui génère le signal utilisateur 5G, par exemple, dans la passerelle Gate ou dans la station de base gNB en appliquant un délai variable de façon à ce que la trame atteigne le satellite et puisse être réémise par le satellite sur le lien utilisateur avec le terminal mobile au temps de référence auquel elle correspond, le temps de traitement dans le satellite pouvant être considéré fixe.

A noter que toute erreur sur la synchronisation appliquée par l'Unité Radio se répercute sur le lien utilisateur avec le terminal mobile UE. La précision temporelle doit donc être meilleure que la durée du Cyclic Prefix/2 (CP) de l'interface, c'est-à-dire typiquement de l'ordre de 1-2 microsecondes au plus pour un espacement des sous-canaux OFDMA (SCS, SubCarrier Spacing) de 15kHz.

Dans les trois modes de réalisation, l'invention concerne les mécanismes de compensation temporelle et de bufferisation qui permettent de montrer à la station de base gNB au sol un délai fixe sur le lien feeder, bien que le délai réel sur le lien soit hautement variable (satellite NGSO), ce qui permet d'éviter les impacts dans le gNB sur la couche eCPRI et sur la fonction scheduler, et de ne pas avoir à implémenter dans le gNB une mesure du délai eCPRI ou des calculs orbitaux, et de la bufferisation.

Il est alors possible de pouvoir implémenter ces compensations et bufférisations en deux étapes, l'étape de compensation au sol étant particulièrement importante dans ce cas.

En outre, il est possible d'appliquer des mécanismes de bufférisation pour compenser la variation du délai du lien feeder qui véhicule l'interface RU-gNB et permette l'implémentation de la fonction RU 5G dans le satellite.

La manière dont ces compensations peut être faîte en un endroit distinct du point de référence temporel de l'interface radio et donc de pouvoir placer ce point de référence à n'importe quel endroit, sans être contraint par l'endroit où est implémentée la fonction RU 5G.

Dans un mode de réalisation particulier, la charge utile CU est partiellement régénérative.

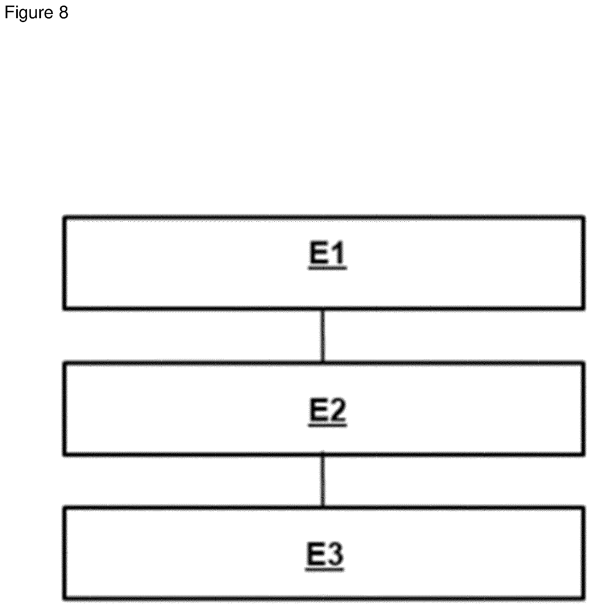

La figure 8 illustre un procédé de communication pour une communication 5G entre au moins un terminal mobile UE et un réseau central CN. Le procédé de communication comprend :

- dans une étape E1, des échanges de trames lien feeder gNB UL, gNB DL, entre ledit satellite SAT et une passerelle Gate, ladite passerelle Gate étant disposée entre ledit satellite SAT et une station de base gNB reliée au réseau central CN ;
- dans une étape E2, des échanges de trames de service UE UL, UE DL entre ledit satellite SAT et le terminal mobile UE, ledit satellite SAT étant à l'interface entre les trames lien feeder gNB UL, gNB DL et les trames de service UE UL, UE DL pour l'échange de données entre le terminal mobile UE et le réseau central CN, lesdites trames de service UE UL, UE DL comprenant des trames de service montantes UE UL et des trames de service descendantes UE DL, lesdites trames de service montantes UE UL devant être alignées temporellement avec lesdites trames des service descendantes UE DL autour d'un point de référence temporel $R_P$, lesdites trames de service UE UL, UE DL étant gérées par une unité radio 301 appartenant à une charge utile CU du satellite SAT ;
- dans une étape E3 de compensation adaptée pour compenser des écarts temporels dans l'échange des trames lien feeder gNB UL, gNB DL en vue d'aligner temporellement les trames de service montantes UE UL et les trames de service descendantes UE DL autour du point de référence temporel $R_P$.

Préférentiellement, l'étape de compensation E3 comprend deux sous-étapes réalisées respectivement dans la charge utile du satellite CU et dans la passerelle Gate.

En variante, l'étape de compensation E3 est réalisée uniquement dans la charge utile CU du satellite SAT ou cette étape de compensation E3 est réalisée uniquement dans la passerelle Gate.

L'invention apporte ainsi les avantages suivants :

Elle facilite l'implémentation d'une charge utile régénérative dans le satellite, ce qui permet de masquer au mobile les imperfections de la transmission sur le lien feeder qui serait visible en mode transparent et qui dégraderait la qualité de la liaison avec le terminal, par exemple le bruit de phase sur le lien feeder si celui-ci utilise une bande de fréquence haute, comme la bande Ka ou Q/V.

Un autre avantage de cette architecture est de pouvoir masquer totalement au terminal UE la variation de délai et le Doppler sur ce lien feeder, de façon à ce qu'il n'ait pas à les compenser.

Un autre avantage est de réduire le RTD (Round Trip Delay) entre le terminal et le point de référence, ce qui permet de limiter l'amplitude du TA (Timing Advance) que le terminal doit appliquer dans le sens montant sur le lien utilisateur.

Un autre avantage de la solution est de pouvoir être étendue pour être capable d'aller jusqu'à positionner le point de référence au plus proche des terminaux qui sont dans la cellule (par exemple au centre du faisceau), ramenant la valeur de RTD entre le terminal et le point de référence à des valeurs proches des déploiements de réseaux cellulaires terrestres (par exemple quelques dizaines de km) et compatible avec des UE qui n'implémentent pas les fonctionnalités d'accès satellite de la release 17 3GPP.

Un autre avantage est de pouvoir placer le gNB à une grande distance de la station sol (par exemple plusieurs centaines de kilomètres), ce qui offre plus de flexibilité dans le déploiement du segment sol.

La solution offre enfin la flexibilité de pouvoir être implémentée partiellement ou totalement dans un équipement au sol de façon à simplifier l'implémentation dans la charge utile du satellite (par exemple pour minimiser les besoins de mémoire dans la charge utile).

La solution peut aussi s'appliquer à une architecture de charge utile transparente (dans laquelle le satellite est considéré comme un répéteur du signal radio utilisateur 5G avec la Radio Unit RU au sol, par exemple intégrée à la passerelle, dans le but de rapprocher le point de référence du terminal (par exemple au niveau du satellite ou au centre du faisceau) avec les avantages expliqués ci-dessus.

**Revendications**

1. Système de communication (1) pour une communication 5G entre au moins un terminal mobile (UE) et un réseau central comprenant une pluralité de stations de base (gNB), ledit système de communication (1) comprenant au moins un satellite (SAT) comprenant une charge utile (CU), au moins une station de base de la pluralité de stations de base (gNB) et une passerelle (Gate) disposée entre ledit satellite (SAT) et ladite station de base (gNB), ledit satellite (SAT) et ladite passerelle (Gate) étant apte à échanger des trames lien feeder (gNB UL, gNB DL), ledit terminal mobile (UE) et ledit satellite (SAT) étant apte à échanger des trames de service (UE UL, UE DL), les dites trames de service (UE UL, UE DL) comprenant des trames de service montantes (UE UL) et des trames de service descendantes (UE DL), lesdites trames de service montantes (UE UL) devant être alignées temporellement avec lesdites trames de service descendantes (UE DL) autour d'un point de référence temporel ($R_P$), ledit système de communication étant **caractérisé en ce que** ledit système de communication (1) comporte une unité radio (301) adaptée pour gérer les échanges de trames de service (UE UL, UE DL) entre le satellite (SAT) et le terminal mobile (UE) et **en ce que** le système de communication (1) comprend un dispositif de compensation (60) adapté pour compenser des écarts temporels dans l'échange des trames lien feeder (gNB UL, gNB DL) en vue d'aligner temporellement les trames de service montantes (UE UL) et les trames de service descendantes (UE DL) autour du point de référence temporel ($R_P$) et **en ce que** le dispositif de compensation comprend un module tampon (601) disposé dans la charge utile (CU) du satellite (SAT), ledit module tampon (601) étant apte à traiter les trames lien feeder (gNB UL, gNB DL) et **en ce que** le dispositif de compensation comprend un module de pré-compensation (602) dans la passerelle et dans lequel le module tampon (601) est apte à resynchroniser temporellement les trames lien feeder (gNB UL, gNB DL) par rapport à une horloge de référence ($R_T$(sat)) du satellite (SAT).

2. Système de communication selon la revendication 1, dans lequel la charge utile (CU) du satellite (SAT) est partiellement régénérative.

3. Système de communication selon l'une quelconque des revendications 1 ou 2, dans lequel à la charge utile (CU) du satellite (SAT) comprend l'unité radio (301).

4. Système de communication selon l'une quelconque des revendications 1 à 3, dans lequel le point de référence temporel ($R_P$) est disposé au niveau du satellite (SAT).

5. Système de communication selon l'une quelconque des revendications 1 à 4, dans lequel l'unité radio (301) comprend un module RF associé à un module L1-low.

6. Procédé de communication pour une communication 5G entre au moins un terminal mobile (UE) et un réseau central formé par au moins une station de base d'une pluralité de stations de base via un satellite (SAT) comportant une charge utile (CU), ledit procédé de communication comprenant :

   - des échanges (E1) de trames lien feeder (gNB UL, gNB DL ), entre ledit satellite (SAT) et une passerelle (Gate), ladite passerelle (Gate) étant disposée entre ledit satellite (SAT) et la station de base (gNB) de la pluralité de stations de base ;
   - des échanges (E2) de trames de service (UE UL, UE DL) entre ledit satellite (SAT) et le terminal mobile (UE), lesdites trames de service (UE UL, UE DL) comprenant des trames de service montantes (UE UL) et des trames de service descendantes (UE DL), lesdites trames de service montantes (UE UL) devant être alignées temporellement avec lesdites trames des service descendantes (UE DL) autour d'un point de référence temporel ($R_P$), lesdites trames de service (UE UL, UE DL) étant gérées par une unité radio (301) ;
   - une étape de compensation (E3) adapté pour compenser des écarts temporels dans l'échange des trames lien feeder (gNB UL, gNB DL) en vue d'aligner temporellement les trames de service montantes (UE UL) et les trames de service descendantes (UE DL) autour du point de référence temporel ($R_P$) et en ce que l'étape de compensation (E3) comprend deux sous-étapes réalisées respectivement dans la charge utile du satellite (CU) et dans la passerelle (Gate).

**Patentansprüche**

1. Kommunikationssystem (1) für eine 5G-Kommunikation zwischen mindestens einem mobilen Endgerät (UE) und einem Kernnetzwerk, das eine Vielzahl von Basisstationen (gNB) umfasst, wobei das Kommunikationssystem (1) mindestens einen Satelliten (SAT) umfasst, der eine Nutzlast (CU) umfasst, mindestens eine Basisstation aus der Vielzahl von Basisstationen (gNB) und ein Gateway (Gate), das zwischen dem Satelliten (SAT) und der Basisstation (gNB) angeordnet ist, wobei der Satellit (SAT) und das Gateway (Gate) in der Lage sind, Link-Feeder-Rahmen auszutauschen (gNB UL, gNB DL), wobei das mobile Endgerät (UE) und der Satellit (SAT) zum Austausch von Dienstrahmen (UE UL, UE DL) in der Lage sind, wobei die Dienstrahmen (UE UL, UE DL) Uplink-Dienstrahmen (UE UL) und Downlink-Dienstrahmen (UE DL) umfassen, wobei die Uplink-Dienstrahmen (UE UL) zeitlich mit den Downlink-Dienstrahmen (UE DL) um einen Zeitbezugspunkt ($R_P$) ausgerichtet werden müssen, wobei das Kommunikationssystem **dadurch gekennzeichnet ist, dass** das Kommunikationssystem (1) eine Funkeinheit (301) aufweist, die angepasst ist, um den Austausch von Dienstrahmen (UE UL, UE DL) zwischen dem Satelliten (SAT) und dem mobilen Endgerät (UE) zu verwalten, und dass das Kommunikationssystem (1) eine Kompensationsvorrichtung (60) umfasst, die angepasst ist, um zeitliche Abweichungen beim Austausch der Link-Feeder-Rahmen (gNB UL, gNB DL) zu kompensieren, um die Uplink-Dienstrahmen (UE UL) und die Downlink-Dienstrahmen (UE DL) zeitlich um den Zeitbezugspunkt ($R_P$) herum auszurichten, und dass die Kompensationsvorrichtung ein Puffermodul (601) umfasst, das in der Nutzlast (CU) des Satelliten (SAT) angeordnet ist, wobei das Puffermodul (601) in der Lage ist, die Link-Feeder-Rahmen (gNB UL, gNB DL) zu verarbeiten und dadurch, dass die Kompensationsvorrichtung ein Vorkompensationsmodul (602) im Gateway umfasst und wobei das Puffermodul (601) in der Lage ist, die Link-Feeder-Rahmen (gNB UL, gNB DL) in Bezug auf eine Referenzuhr ($R_T$(sat)) des Satelliten (SAT) zeitlich neu zu synchronisieren.

2. Kommunikationssystem nach Anspruch 1, wobei die Nutzlast (CU) des Satelliten (SAT) teilweise regenerativ ist.

3. Kommunikationssystem nach einem der Ansprüche 1 oder 2, wobei die Nutzlast (CU) des Satelliten (SAT) die Funkeinheit (301) umfasst.

4. Kommunikationssystem nach einem der Ansprüche 1 bis 3, wobei der Zeitbezugspunkt ($R_P$) auf Höhe des Satelliten (SAT) angeordnet ist.

5. Kommunikationssystem nach einem der Ansprüche 1 bis 4, wobei die Funkeinheit (301) ein HF-Modul umfasst, das mit einem L1-low-Modul verbunden ist.

6. Kommunikationsverfahren für eine 5G-Kommunikation zwischen mindestens einem mobilen Endgerät (UE) und einem Kernnetzwerk, das von mindestens einer Basisstation aus einer Vielzahl von Basisstationen gebildet wird, über einen Satelliten (SAT), der eine Nutzlast (CU) umfasst, wobei das Kommunikationsverfahren Folgendes umfasst:

   - Austausch (E1) von Link-Feeder-Rahmen (gNB UL, gNB DL) zwischen dem Satelliten (SAT) und einem Gateway (Gate), wobei das Gateway (Gate) zwischen dem Satelliten (SAT) und der Basisstation (gNB) der Vielzahl von Basisstationen angeordnet ist,
   - Austausch (E2) von Dienstrahmen (UE UL, UE DL) zwischen dem Satelliten (SAT) und dem mobilen Endgerät (UE), wobei die Dienstrahmen (UE UL, UE DL) Uplink-Dienstrahmen (UE UL) und Downlink-Dienstrahmen (UE DL) umfassen, wobei die Uplink-Dienstrahmen (UE UL) zeitlich mit den Downlink-Dienstrahmen (UE DL) um einen Zeitreferenzpunkt ($R_P$) herum ausgerichtet werden müssen, wobei die Dienstrahmen (UE UL, UE DL) von einer Funkeinheit (301) verwaltet werden;
   - einen Kompensationsschritt (E3), der dazu angepasst ist, zeitliche Abweichungen beim Austausch der Link-Feeder-Rahmen (gNB UL, gNB DL) zu kompensieren, um die Uplink-Dienstrahmen (UE UL) und die Downlink-Dienstrahmen (UE DL) um den Zeitreferenzpunkt ($R_P$) zeitlich auszurichten, und dass der Kompensationsschritt (E3) zwei Unterschritte umfasst, die jeweils in der Satellitennutzlast (CU) und im Gateway (Gate) ausgeführt werden.

**Claims**

1. A communication system (1) for a 5G communication between at least one mobile terminal (UE) and a core network comprising a plurality of base stations (gNB), said communication system (1) comprising at least one satellite (SAT) comprising a payload (CU), at least one base station of the plurality of base stations (gNB) and a gateway (Gate) disposed between said satellite (SAT) and said base station (gNB), said satellite (SAT) and said gateway (Gate) being able to exchange feeder link frames (gNB UL, gNB DL), said mobile terminal (UE) and said satellite (SAT) being able to exchange service frames (UE UL, UE DL), said service frames (UE UL, UE DL) comprising uplink service frames (UE UL) and downlink service frames (UE DL), said uplink service frames (UE UL) having to be temporally aligned with said downlink service frames (UE DL) around a time reference point ($R_P$), said communication system being **characterised in that** said communication system (1) has a radio unit (301) suitable for managing the exchanges of service frames (UE UL, UE DL) between the satellite (SAT) and the mobile terminal (UE) and **in that** the communication system (1) comprises a compensation device (60) suitable for compensating time differences in the exchange of feeder link frames (gNB UL, gNB DL) in order to temporally align the uplink service frames (UE UL) and the downlink service frames (UE DL) around the time reference point ($R_P$) and **in that** the compensation device comprises a buffer module (601) disposed in the payload (CU) of the satellite (SAT), said buffer module (601) being able to process the feeder link frames (gNB UL, gNB DL) and **in that** the compensation device comprises a pre-compensation module (602) in the gateway and in which the buffer module (601) is able to temporally resynchronise the feeder link frames (gNB UL, gNB DL) with respect to a reference clock ($R_T$(sat)) of the satellite (SAT).

2. The communication system according to claim 1, wherein the payload (CU) of the satellite (SAT) is partially regenerative.

3. The communication system according to any one of claims 1 and 2, wherein the payload (CU) of the satellite (SAT) comprises the radio unit (301).

4. The communication system according to any one of claims 1 to 3, wherein the time reference point ($R_P$) is disposed at the satellite (SAT).

5. The communication system according to any one of claims 1 to 4, wherein the radio unit (301) comprises an RF module associated with a L1-low module.

6. The communication method for a 5G communication between at least one mobile terminal (UE) and a core network formed by at least one base station of a plurality of base stations via a satellite (SAT) comprising a payload (CU), said communication method comprising:

   - exchanges (E1) of feeder link frames (gNB UL, gNB DL), between said satellite (SAT) and a gateway (Gate), said gateway (Gate) being disposed between said satellite (SAT) and the base station (gNB) of the plurality of base stations;
   - exchanges (E2) of service frames (UE UL, UE DL) between said satellite (SAT) and the mobile terminal (UE), said service frames (UE UL, UE DL) comprising uplink service frames (UE UL) and downlink service frames (UE DL), said uplink service frames (UE UL) having to be temporally aligned with said downlink service frames (UE DL) around a time reference point ($R_P$), said service frames (UE UL, UE DL) being managed by a radio unit (301);
   - a compensation step (E3) suitable for compensating time differences in the exchange of the feeder link frames (gNB UL, gNB DL) in order to temporally align the uplink service frames (UE UL) and the downlink service frames (UE DL) around the time reference point ($R_P$) and in that the compensation step (E3) comprises two substeps performed respectively in the payload of the satellite (CU) and in the gateway (Gate).

Figure 1

Figure 2

Figure 3

**Fig. 4**

Figure 5

Figure 6

Figure 7

Figure 8